# EUROPEAN PATENT APPLICATION

(11) **EP 4 653 874 A1**
(43) Date of publication of application: **26.11.2025**
(21) Application number: 23917629.0
(22) Date of filing: 08.11.2023
(51) Int. Cl.: G01N 35/04

(54) **AUTOMATIC ANALYSIS DEVICE AND GRIPPING DEVICE**

(30) Priority: 18.01.2023 JP 2023006199
(71) Applicant: HITACHI HIGH-TECH CORPORATION, Tokyo 105-6409 (JP)
(72) Inventor: KOBAYASHI, Tatsuya, Tokyo 105-6409 (JP); NODA, Kazuhiro, Tokyo 105-6409 (JP); OKABE, Shugo, Tokyo 105-6409 (JP)
(74) Representative: Strehl & Partner mbB
(86) International application number: PCT/JP2023/040287
(87) International publication number: WO 2024/154417

(57) **Abstract**

An automatic analyzer and a gripping apparatus are provided which include a gripping mechanism with reduced risks of breakage of components and a sample loss when reaction vessels filled with samples and reagents are transferred. An automatic analyzer 101 includes: a main body; an arm horizontally extending out from the main body and having a gripping unit located at a leading end thereof to grip a reaction vessel 122; and an abnormal downward movement sensing sensor 214 and an abnormal downward movement sensing plate 213 that detect whether the arm has caused a rotational movement vertically upward when the arm together with the main body moves downward.

## Description

### Technical Field

The present invention relates to an automatic analyzer and a gripping apparatus.

### Background Art

PTL 1 discloses that, when an abnormal external force equal to or larger than a certain small force is applied to a pipette or an arm, a first sensor is turned off by rotating the arm by an angle exceeding a certain angle, and when an abnormal external force equal to or larger than a certain large force is applied to the pipette or the arm, a second sensor is turned on by rotating the arm by an angle exceeding a certain angle larger than the above angle, a controller receives an abnormality sensing signal from one of the two sensors and instructs a vertical movement mechanism or a front-rear movement mechanism to perform a movement stop operation.

### Citation List

### Patent Literature

PTL 1: JPH9-171026A

### Summary of Invention

### Technical Problem

In an automatic analyzer, in order to perform an analysis safely and reliably, it is required to reduce a risk of component breakage and a sample loss due to operation abnormality of various mechanisms in the automatic analyzer.

For example, there is a function of detecting that an external force is applied to a dispensing nozzle. An example of such a function is disclosed in PTL 1.

An automatic analyzer in PTL 1 includes a sensor that detects an external force for rotating an arm that holds the dispensing nozzle upward around a pin against a biasing force of a spring, and has a function of detecting that the external force is applied to the dispensing nozzle when the dispensing nozzle is moved downward.

However, in an apparatus equipped with a mechanism for transferring a reaction vessel into which a sample and a reagent are dispensed, there is a risk of component breakage and a sample loss when an external force is applied to a vessel gripping arm of a transfer mechanism section. Therefore, it is required to provide a function of detecting that an external force is applied to an arm.

The present invention provides an automatic analyzer and a gripping apparatus including a gripping mechanism for reducing a risk of component breakage and a sample loss.

### Solution to Problem

The invention includes a plurality of units for solving the above-described problems, and as an example, the invention includes a main body, an arm that horizontally extends out from the main body and has a gripping unit located at a leading end thereof to grip an object to be gripped, and a sensing section detecting, when the arm, together with the main body, moves downward, whether the arm has caused a rotational movement vertically upward.

### Advantageous Effects of Invention

According to the present invention, it is possible to reduce a risks of component breakage and a sample loss. Problems, configurations, and effects other than those described above will be clarified by description of the following embodiment.

### Brief Description of Drawings

[Fig. 1] Fig. 1 is a diagram illustrating an overview of an example configuration of an automatic analyzer according to an embodiment.
[Fig. 2] Fig. 2 is a schematic side view of a reaction vessel transfer mechanism of the automatic analyzer according to an embodiment.
[Fig. 3] Fig. 3 is a sectional view of a reaction vessel transfer mechanism taken at the shaft center in the automatic analyzer according to an embodiment.
[Fig. 4] Fig. 4 is a side view of a reaction vessel transfer mechanism of the automatic analyzer according to an embodiment when an external force is applied to the reaction vessel transfer mechanism.
[Fig. 5] Fig. 5 is a flowchart illustrating a flow when an abnormal downward movement occurs in the automatic analyzer according to an embodiment.

### Description of Embodiments

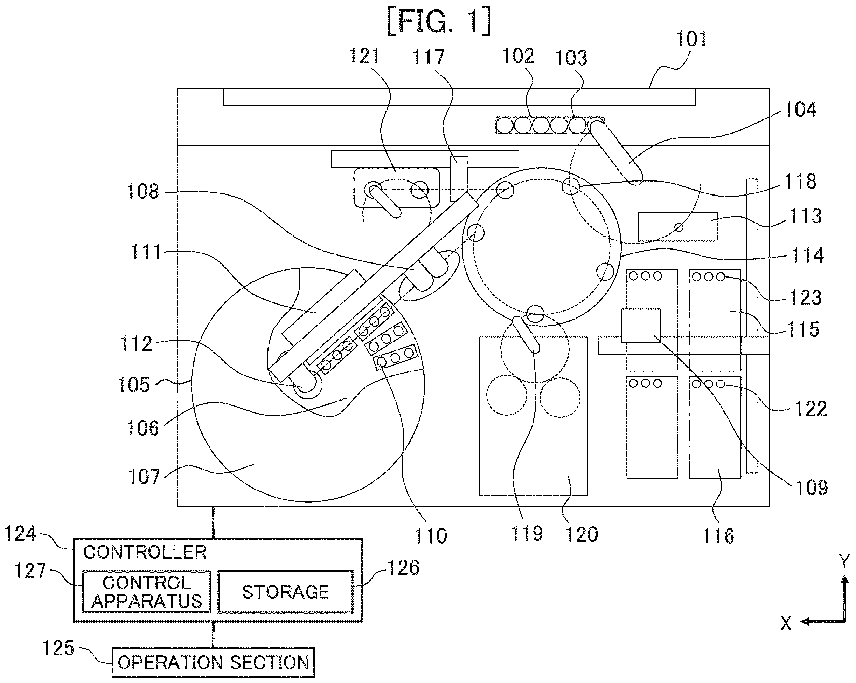

An embodiment of an automatic analyzer and a gripping apparatus according to the invention will be described with reference to FIGS. 1 to 5. In the drawings used in the present specification, the same or corresponding components are denoted by the same or similar reference signs, and a repeated description of these components may be omitted.

First, an overall configuration of the automatic analyzer will be described with reference to FIG. 1. FIG. 1 is an example of a configuration diagram of the automatic analyzer according to the invention.

In FIG. 1, the automatic analyzer 101 is an apparatus for analyzing a sample using a reagent corresponding to a predetermined analysis item, and includes a sample dispenser mechanism 104, a reagent storage unit 105, a reagent dispenser mechanism 108, a magnetic particle stirring arm 112, a first reaction vessel transfer mechanism 117, an incubator 114, a reaction solution stirring mechanism 121, a reaction vessel/sample dispensing tip transfer mechanism 109, a sample dispensing tip mounting area 113, a second reaction vessel transfer mechanism 119, an immune sensing mechanism 120, a controller 124, an operation section 125, and the like.

In the automatic analyzer 101 as illustrated in FIG. 1, a sample is transferred to an access position of the sample dispenser mechanism 104 in a state where the sample is accommodated in a plurality of sample vessels 103 placed on a sample transfer rack 102.

The sample dispenser mechanism 104 includes a rotation drive mechanism, a vertical drive mechanism, and a dispensing probe, and is moved between a sample aspiration position and a sample discharge position by driving the rotation drive mechanism and the vertical drive mechanism.

The reagent storage unit 105 is a mechanism for storing a plurality of reagent packs (omitted for convenience of illustration) containing reagents, and includes a reagent disc 106. The reagent storage unit 105 has a thermal insulation function for improving on-board stability of reagent properties. An upper opening portion of the reagent storage unit 105 and a reagent vessel lid opening/closing mechanism 111 are covered with a reagent cold storage cover 107 to improve cooling efficiency by heat insulation and prevent dust and dirt from entering.

Reagent pack holding portions are arranged in a double ring shape on the reagent disc 106, and can hold a plurality of reagent vessels 110 in a ring shape. The reagent disc 106 has a rotation drive mechanism, and moves each reagent vessel 110 to a predetermined position on a circumferential portion by a rotation motion.

The reagent dispenser mechanism 108 includes a horizontal drive mechanism, a vertical drive mechanism, and a dispensing probe. The reagent dispenser mechanism 108 is horizontally moved and moved downward to a position of the predetermined reagent vessel 110 on the reagent disc 106 to aspirate a predetermined amount of reagent. After the reagent aspiration, the reagent dispenser mechanism 108 is moved upward. Next, the reagent dispenser mechanism 108 is horizontally moved and moved downward to a reaction vessel 122 mounted at a reagent discharge destination, and dispenses a reagent.

The magnetic particle stirring arm 112 (also referred to as a stirrer) serving as a stirring unit is set on the reagent disc 106. The magnetic particle stirring arm 112 is moved to an upper region of a reagent pack containing a magnetic particle solution to be stirred, a magnetic particle stirring element of the magnetic particle stirring arm 112 is moved down, and the stirring element is rotated to stir the magnetic particle solution. In order to prevent magnetic particles in the solution from naturally precipitating, the magnetic particle stirring arm 112 stirs the magnetic particles immediately before a reagent is dispensed.

Hereinafter, an analysis flow for an immune analysis item will be described in the order of processing.

The first reaction vessel transfer mechanism 117 includes drive mechanisms in X-axis and Z-axis directions and a reaction vessel gripping mechanism, and has a function of moving a reaction vessel to each reaction vessel mounting position of the incubator 114 and the reaction solution stirring mechanism 121.

The reaction vessel/sample dispensing tip transfer mechanism 109 includes drive mechanisms in X-axis, Y-axis, and Z-axis directions and a reaction vessel gripping mechanism, and moves above the sample dispensing tip mounting area 113, the incubator 114, a sample dispensing tip tray 115, and a reaction vessel tray 116.

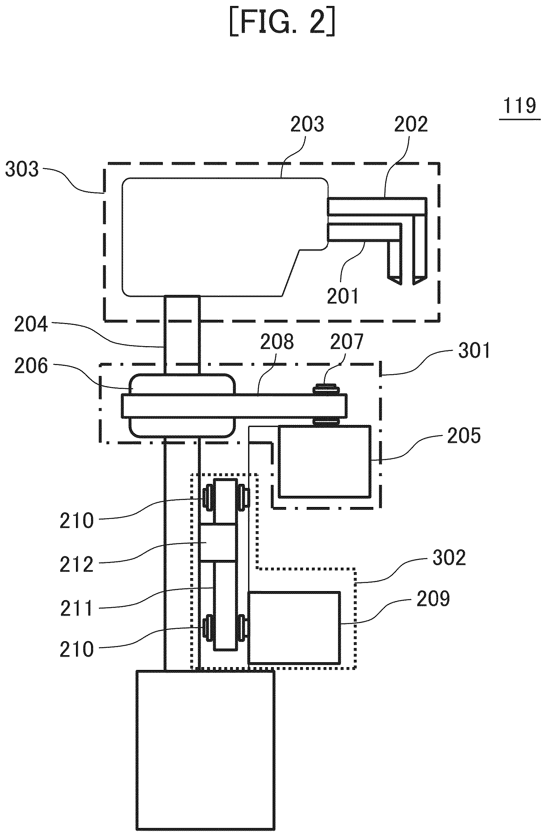

The second reaction vessel transfer mechanism 119 includes a rotation drive mechanism, a vertical drive mechanism, and a reaction vessel gripping mechanism, and has a function of moving the reaction vessel 122 to each reaction vessel mounting position of the incubator 114 and the immune sensing mechanism 120. Although the second reaction vessel transfer mechanism 119 that rotates around a shaft 204 (see FIG. 2) is a main application target of the gripping apparatus in an present embodiment to be described later, the gripping apparatus of the present embodiment can also be applied to the above-described first reaction vessel transfer mechanism 117 that linearly transfers an object in an x-y plane or the reaction vessel/sample dispensing tip transfer mechanism 109 to be described later.

The reaction vessel/sample dispensing tip transfer mechanism 109 moves the reaction vessel 122 from the reaction vessel tray 116 to the incubator 114. A sample is placed in the sample vessel 103 such as a test tube, placed on the sample transfer rack 102, and transferred to a sample aspiration position. Next, the reaction vessel/sample dispensing tip transfer mechanism 109 moves a sample dispensing tip 123 from the sample dispensing tip tray 115 to the sample dispensing tip mounting area 113. After the sample dispensing tip 123 to be mounted in the sample dispensing tip mounting area 113 is mounted, the sample dispenser mechanism 104 dispenses a predetermined amount of sample into the reaction vessel 122 mounted at a sample discharge position 118 on the incubator 114. Thereafter, the reaction vessel 122 into which the sample is discharged is moved to a reagent discharge position by a rotation drive of the incubator 114.

The reagent dispenser mechanism 108 dispenses a predetermined amount of reagent into the reaction vessel 122 mounted at the reagent discharge position. Thereafter, the reaction vessel 122 is moved to the reaction solution stirring mechanism 121 by the first reaction vessel transfer mechanism 117, and the sample and the reagent are stirred.

After stirring the reaction solution, the reaction vessel 122 is moved to the incubator 114 by the first reaction vessel transfer mechanism 117. A temperature of the incubator 114 is adjusted to an appropriate temperature for the purpose of promoting the reaction between the sample and the reagent, and when the reaction process of the sample and the reagent on the incubator 114 is completed, the reaction vessel 122 is moved to the immune sensing mechanism 120 by the second reaction vessel transfer mechanism 119.

Thereafter, the reaction solution is aspirated into a detection unit in the immune sensing mechanism 120, and a reaction signal is measured.

After the signal measurement, the reaction vessel 122 is moved to the incubator 114 by the second reaction vessel transfer mechanism 119, and then discarded into a reaction vessel disposal hole by the reaction vessel/sample dispensing tip transfer mechanism 109.

In the automatic analyzer 101, the mechanisms described above are referred to as analytical operation units.

Further, the automatic analyzer 101 includes a controller 124 and a controller 125 that control an operation of each apparatus in the automatic analyzer 101, in addition to the analytical operation units.

The controller 124 includes, for example, a hardware substrate and a computer, and a storage 126 such as a hard disc or a control apparatus 127 is built in the controller 124.

The storage 126 stores, for example, a control parameter corresponding to each mechanism.

The control apparatus 127 may be implemented by hardware by a dedicated circuit board, or may be implemented by software executed by a computer. When the control apparatus 127 is implemented by hardware, the control apparatus 127 can be implemented by integrating a plurality of calculators for executing processing on a wiring board or in a semiconductor tip or a package. When the control apparatus 127 is implemented by software, the control apparatus 127 can be implemented by mounting a high-speed general-purpose CPU on a computer and executing a program for executing desired calculation processing. It is also possible to upgrade an existing apparatus by a recording medium in which a program is recorded. These apparatuses, circuits, and computers are connected by a wired or wireless network, and data is transmitted and received as appropriate.

The operation section 125 includes a display device that is a display and an input device such as a mouse and a keyboard.

The automatic analyzer 101 is configured as described above.

The configuration of the automatic analyzer 101 is not limited to a case of an analysis of immune analysis items as illustrated in FIG. 1, and may be an analyzer that executes an analysis of other analysis items, such as an analyzer that executes an analysis of biochemical analysis items. In addition, the automatic analyzer may be an analyzer that executes an analysis of both immune analysis items and biochemical analysis items, an analyzer of another analysis items, for example, an analyzer that is separately provided with an analysis apparatus that measures an electrolyte, or the like.

Further, the automatic analyzer 101 is not limited to a form of a single analysis module configuration as illustrated in FIG. 1, and may be implemented such that two or more analysis modules capable of measuring various same or different analysis items or preprocessing modules for executing preprocessing are connected by a transfer apparatus.

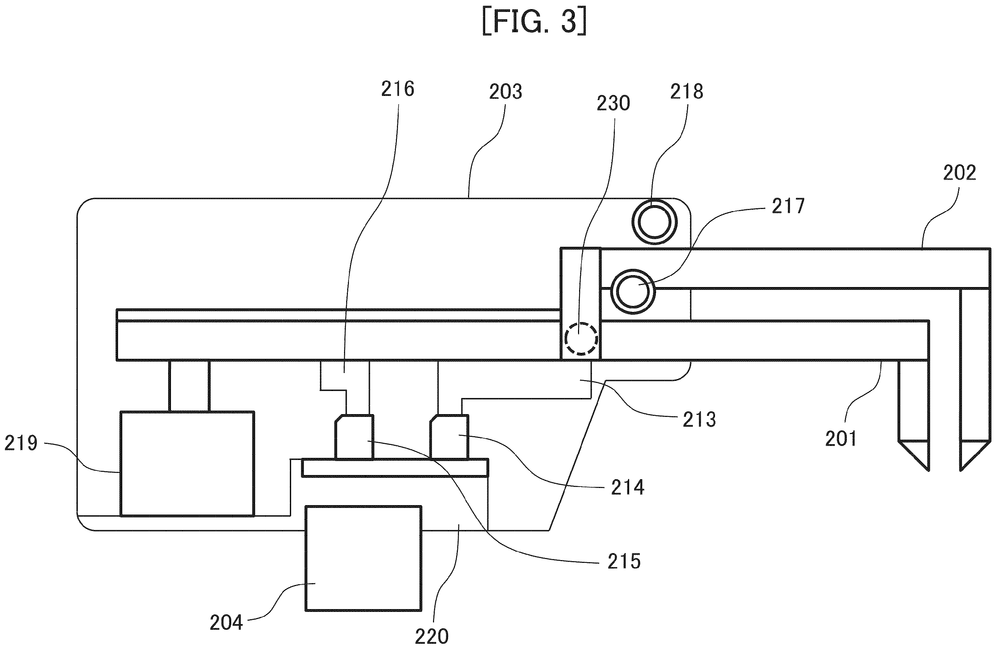

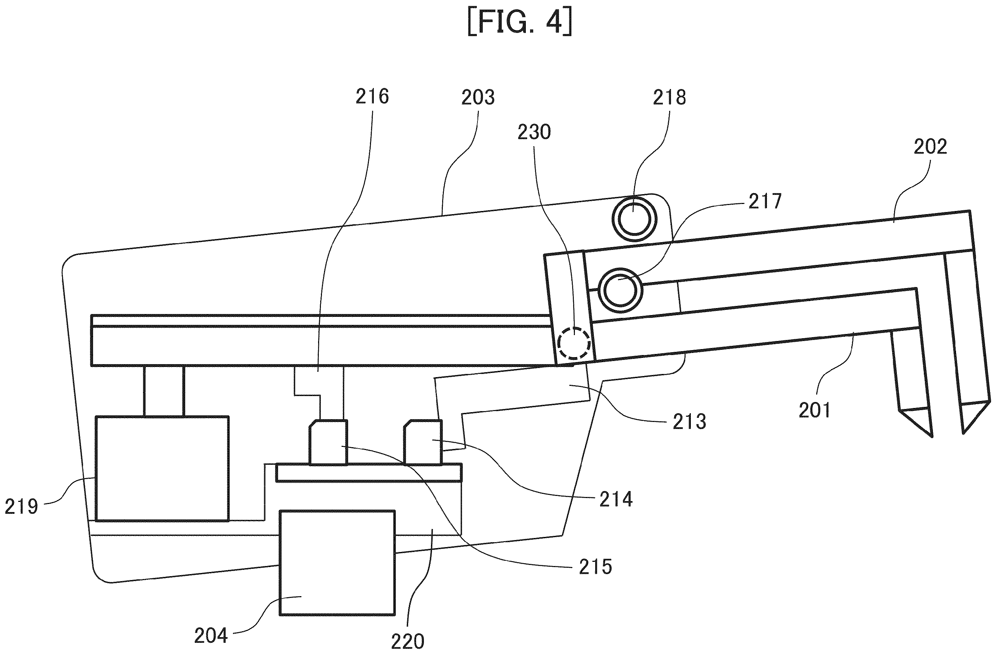

Next, a structure of the second reaction vessel transfer mechanism 119 of the automatic analyzer 101 according to the present invention will be described in detail with reference to FIGS. 2 to 4. FIG. 2 is a schematic side view of the reaction vessel transfer mechanism, FIG. 3 is a cross-sectional view of the reaction vessel transfer mechanism taken along the center of a shaft, and FIG. 4 is a side view illustrating a state when the reaction vessel transfer mechanism receives an external force.

As illustrated in FIG. 2, the second reaction vessel transfer mechanism 119 includes a rotation drive unit 301, a vertical drive unit 302, and a vessel gripping unit 303.

The vessel gripping unit 303 is rotated on a rotation trajectory on each vessel mounting position by a rotation drive motor 205 of the rotation drive unit 301, and is moved upward and downward by a vertical drive motor 209 of the vertical drive unit 302 to mount the reaction vessel 122 at each vessel mounting position or grip the reaction vessel 122 to move the reaction vessel 122 from each vessel mounting position to a subsequent position.

The rotation drive unit 301 mainly includes the rotation drive motor 205, a first rotation drive pulley 206, a second rotation drive pulley 207, and a rotation drive belt 208.

The first rotation drive pulley 206 is disposed on an axis of the shaft 204, and the second rotation drive pulley 207 is connected to an axis of the rotation drive motor 205. The rotation drive belt 208 is connected to the first rotation drive pulley 206 and the second rotation drive pulley 207, and the first rotation drive pulley 206 and the second rotation drive pulley 207 are arranged at horizontal positions. With such a configuration, the rotation drive unit 301 can rotate the vessel gripping unit 303 about the shaft 204 in a horizontal direction and move the vessel gripping unit 303 to above each vessel mounting position.

The vertical drive unit 302 mainly includes the vertical drive motor 209, vertical drive pulleys 210, a vertical drive belt 211, and a vertical coupling base 212.

One of the vertical drive pulleys 210 is connected to a shaft of the vertical drive motor 209, and the other one is disposed above the one of the vertical drive pulleys 210. The vertical drive belt 211 is connected to the two vertical drive pulleys 210 that are arranged vertically. The vertical coupling base 212 is connected to the shaft 204 and the vertical drive belt 211, and couples the shaft 204 and the vertical drive unit 302. With such a configuration, the vertical drive unit 302 can move the vessel gripping unit 303 upward and downward to mount the reaction vessel 122 to each vessel mounting position or move the reaction vessel 122 to a subsequent vessel mounting position.

The vessel gripping unit 303 mainly includes a first vessel gripping arm 201, a second vessel gripping arm 202, a vessel grip cover 203, a gripping drive motor 219, an abnormal downward movement sensing sensor 214, a vessel gripping arm opening/closing sensing sensor 215, an abnormal downward movement sensing plate 213, a gripping arm opening/closing sensing plate 216, and a vessel gripping frame 220.

The gripping drive motor 219, the abnormal downward movement sensing sensor 214, the vessel gripping arm opening/closing sensing sensor 215, the abnormal downward movement sensing plate 213, the gripping arm opening/closing sensing plate 216, and the vessel gripping frame 220 constitute a main body.

In addition, an arm protruding in the horizontal direction from the main body and having a gripping unit for gripping the reaction vessel 122 at a tip end of the arm includes the first vessel gripping arm 201 having a first portion whose tip end extends downward in the vertical direction, and the second vessel gripping arm 202 that extends along the first vessel gripping arm 201 above the first vessel gripping arm 201 in the vertical direction and that has a second portion whose tip end extends downward in the vertical direction.

The vessel grip cover 203 covers the entire vessel gripping unit 303. The vessel grip cover 203 is connected to the vessel gripping frame 220, and a cover bearing 218 is attached between the second vessel gripping arm 202 and the vessel grip cover 203.

The first vessel gripping arm 201 protrudes in the horizontal direction, and has an arm (first portion) whose tip end extends downward in the vertical direction to grip the reaction vessel 122.

The second vessel gripping arm 202 is disposed above the first vessel gripping arm 201, extends along the first vessel gripping arm 201, and includes a gripping arm (second portion) whose tip end extends downward in the vertical direction.

The arm of the first vessel gripping arm 201 and the gripping arm of the second vessel gripping arm 202 are configured to grip the reaction vessel 122 by sandwiching the reaction vessel 122.

In the present embodiment, the first vessel gripping arm 201 and the second vessel gripping arm 202 are rotated upward in the vertical direction in conjunction with each other about a rotational center axis 230 provided in the vicinity of a connection portion between the abnormal downward movement sensing plate 213 and the first vessel gripping arm 201 when the first vessel gripping arm 201 and the second vessel gripping arm 202 collide with an object present on a lower side in the vertical direction. Details will be described later.

The first vessel gripping arm 201 and the second vessel gripping arm 202 are connected to the gripping drive motor 219, and the gripping arm opening/closing sensing plate 216 for sensing opening/closing of a vessel gripping arm is attached to the second vessel gripping arm 202 in the vicinity of the gripping drive motor 219.

The abnormal downward movement sensing plate 213 is attached to the first vessel gripping arm 201 and is disposed at a horizontal position of the gripping arm opening/closing sensing plate 216.

The abnormal downward movement sensing sensor 214 and the vessel gripping arm opening/closing sensing sensor 215 are attached to the vessel gripping frame 220, and are disposed below the first vessel gripping arm 201 and the second vessel gripping arm 202. The abnormal downward movement sensing sensor 214 and the vessel gripping arm opening/closing sensing sensor 215 are optical sensors.

In a case where the first vessel gripping arm 201 and the second vessel gripping arm 202 are moved in the horizontal direction in the vessel gripping unit 303, it is detected that the first vessel gripping arm 201 and the second vessel gripping arm 202 are opened when it is detected that light of the vessel gripping arm opening/closing sensing sensor 215 is blocked by the gripping arm opening/closing sensing plate 216. Opening may be detected when the light of the vessel gripping arm opening/closing sensing sensor 215 is blocked by the gripping arm opening/closing sensing plate 216.

When the reaction vessel 122 mounted at each vessel mounting position is gripped, the gripping drive motor 219 is driven to horizontally move the first vessel gripping arm 201 and the second vessel gripping arm 202. At this time, when the gripping arm opening/closing sensing plate 216 is detached from the vessel gripping arm opening/closing sensing sensor 215, it is detected that the first vessel gripping arm 201 and the second vessel gripping arm 202 are opened. The gripping arm opening/closing sensing plate 216 is horizontally moved in the same direction as the second vessel gripping arm 202.

In a case where the first vessel gripping arm 201 and the second vessel gripping arm 202 are rotated upward in the vertical direction about the rotational center axis 230 provided in the vicinity of the connection portion between the abnormal downward movement sensing plate 213 and the first vessel gripping arm 201 during a downward movement of the vessel gripping unit 303 in a gripping operation of the reaction vessel 122, an abnormal downward movement of an arm is detected when it is detected that the light of the abnormal downward movement sensing sensor 214 is blocked by the abnormal downward movement sensing plate 213. The abnormal downward movement may be detected when the light of the abnormal downward movement sensing sensor 214 is blocked by the abnormal downward movement sensing plate 213.

Specifically, when the vessel gripping unit 303 is moved downward, an external force is applied to the first vessel gripping arm 201 and the second vessel gripping arm 202 from a lower side to an upper side in the vertical direction, so that the first vessel gripping arm 201 and the second vessel gripping arm 202 are rotated upward in the vertical direction about the rotational center axis 230.

At this time, when the abnormal downward movement sensing plate 213 is detached from the abnormal downward movement sensing sensor 214, it is detected that an external force is applied to the first vessel gripping arm 201 and the second vessel gripping arm 202. The abnormal downward movement sensing plate 213 is rotated in the same direction as the first vessel gripping arm 201 and the second vessel gripping arm 202.

An arm bearing 217 is attached to the second vessel gripping arm 202, and when the first vessel gripping arm 201 is rotated by an external force, the first vessel gripping arm 201 comes into contact with the arm bearing 217. At this time, the second vessel gripping arm 202 is rotated in conjunction with the first vessel gripping arm 201.

When an arm is abnormally moved downward and the first vessel gripping arm 201 is rotated by an external force, the second vessel gripping arm 202 is rotated in conjunction with the first vessel gripping arm 201. At this time, the second vessel gripping arm 202 comes into contact with the cover bearing 218, and the vessel grip cover 203 is rotated in conjunction with the first vessel gripping arm 201 and the second vessel gripping arm 202.

Further, when it is detected that an arm is abnormally moved downward, an alarm indicating that an abnormal downward movement occurred can be displayed on the operation section 125 of the automatic analyzer 101. The alarm may be in a form of sound, lighting of a warning lamp, or the like. When the alarm is displayed, an analysis plan and an analysis operation can be stopped.

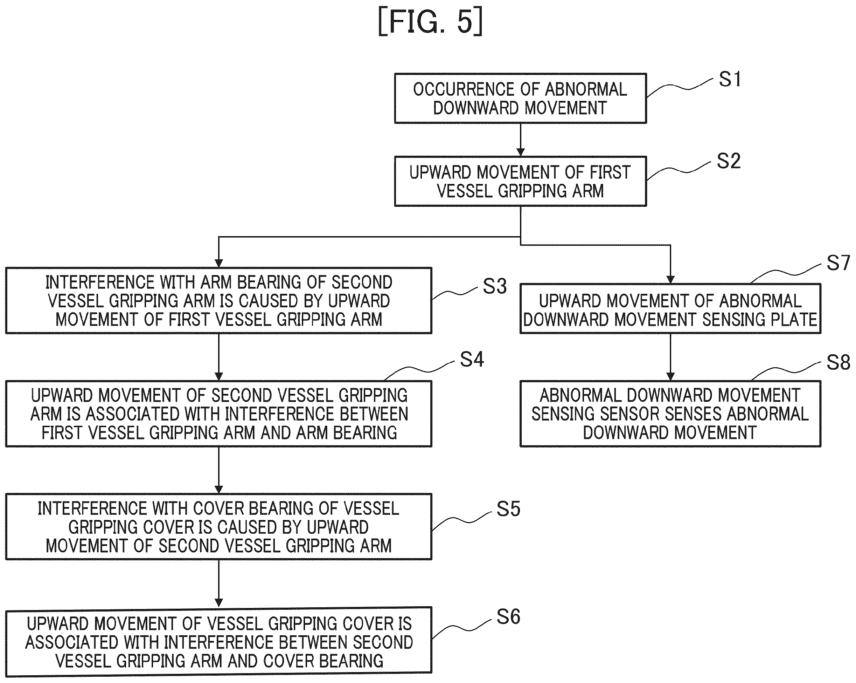

Next, a flow when the abnormal downward movement occurs will be described with reference to FIG. 5. FIG. 5 is a flowchart illustrating a flow when the abnormal downward movement occurs.

As illustrated in FIG. 5, when an abnormal downward movement of the first vessel gripping arm 201 occurs for some reason (S1), the first vessel gripping arm 201 is moved upward (S2). Thereafter, the processing branches to S3 and S7.

When the first vessel gripping arm 201 is moved upward, the first vessel gripping arm 201 interferes with the arm bearing 217 of the second vessel gripping arm 202 due to the upward movement (S3). Along with the interference between the first vessel gripping arm 201 and the arm bearing 217, the second vessel gripping arm 202 is also moved upward (S4).

When the second vessel gripping arm 202 is moved upward, the second vessel gripping arm 202 interferes with the cover bearing 218 of the vessel grip cover 203 due to the upward movement (S5). Along with the interference between the second vessel gripping arm 202 and the cover bearing 218, the vessel grip cover 203 is also moved upward (S6).

In parallel with the upward movement of the second vessel gripping arm 202 and the vessel grip cover 203, the abnormal downward movement sensing plate 213 is also moved upward (S7). Due to the upward movement of the abnormal downward movement sensing plate 213, the abnormal downward movement sensing sensor 214 senses an abnormal downward movement (S8), and shifts to processing such as alarm issuing.

Next, effects of the present embodiment will be described.

The automatic analyzer 101 according to the present embodiment described above includes the main body, an arm that protrudes in the horizontal direction from the main body and that has the gripping unit that grips the reaction vessel 122 at the tip end of the arm, and the abnormal downward movement sensing sensor 214 and the abnormal downward movement sensing plate 213 that detect whether the arm is rotated upward in the vertical direction when the arm is moved downward together with the main body.

With such a configuration, since it is possible to quickly detect a case where an unexpected external force is applied to the arm due to an abnormal downward movement, it is possible to reduce a risk of component breakage or a sample loss in a gripping mechanism unit of a transfer mechanism section as compared with an apparatus configuration in the related art.

In addition, since the arm includes the first vessel gripping arm 201 having the first portion whose tip end extends downward in the vertical direction and the second vessel gripping arm 202 that extends along the first vessel gripping arm 201 above the first vessel gripping arm 201 in the vertical direction and that has the second portion whose tip end extends downward in the vertical direction, the gripping unit is configured to grip the reaction vessel 122 by sandwiching the reaction vessel 122 between the first portion and the second portion, and the first vessel gripping arm 201 and the second vessel gripping arm 202 are configured to rotate in conjunction with each other when an arm is abnormally moved downward, it is possible to reliably grip the reaction vessel 122 with a simple mechanism and prevent any arm from being damaged by an external force without rotating the arm when the abnormal downward movement occurs.

The automatic analyzer 101 further includes the vessel grip cover 203 that covers the main body, and when an arm is abnormally moved downward, the vessel grip cover 203 and the arm are rotated in conjunction with each other, so that the first vessel gripping arm 201 and the second vessel gripping arm 202 can be protected by the vessel grip cover 203 in a normal state, and there is no risk that the first vessel gripping arm 201 and the second vessel gripping arm 202 interfere with the vessel grip cover 203 and are damaged when the arm is abnormally moved downward, and accordingly, it is possible to provide the automatic analyzer 101 with higher reliability.

In addition, the automatic analyzer 101 further includes the operation section 125 that displays an alarm when the abnormal downward movement sensing sensor 214 and the abnormal downward movement sensing plate 213 detect a rotation operation of an arm, a user can easily grasp the occurrence of an abnormal downward movement, so that it is possible to quickly take countermeasure work when the abnormal downward movement occurs, and it is possible to shorten a time up to the restart of the analysis.

### <Others>

The invention is not limited to the embodiments described above, and various modifications and applications are possible. The embodiments described above are described in detail for easy understanding of the invention, and are not necessarily limited to those having all the configurations described above.

### Reference Signs List

- 101: automatic analyzer
- 102: sample transfer rack
- 103: sample vessel
- 104: sample dispenser mechanism
- 105: reagent storage unit
- 106: reagent disc
- 107: reagent cold storage cover
- 108: reagent dispenser mechanism
- 109: reaction vessel/sample dispensing tip transfer mechanism
- 110: reagent vessel
- 111: reagent vessel lid opening/closing mechanism
- 112: magnetic particle stirring arm
- 113: sample dispensing tip mounting area
- 114: incubator
- 115: sample dispensing tip tray
- 116: reaction vessel tray
- 117: first reaction vessel transfer mechanism
- 118: sample discharge position
- 119: second reaction vessel transfer mechanism
- 120: immune sensing mechanism
- 121: reaction solution stirring mechanism
- 122: reaction vessel (to be gripped)
- 123: sample dispensing tip
- 124: controller
- 125: operation section (display section)
- 126: storage
- 127: control apparatus
- 201: first vessel gripping arm (first arm)
- 202: second vessel gripping arm (second arm)
- 203: vessel grip cover
- 204: shaft (rotational axis)
- 205: rotation drive motor
- 206: first rotation drive pulley
- 207: second rotation drive pulley
- 208: rotation drive belt
- 209: vertical drive motor
- 210: vertical drive pulley
- 211: vertical drive belt
- 212: vertical coupling base
- 213: abnormal downward movement sensing plate (sensing section)
- 214: abnormal downward movement sensing sensor (sensing section)
- 215: vessel gripping arm opening/closing sensing sensor
- 216: gripping arm opening/closing sensing plate
- 217: arm bearing
- 218: cover bearing
- 219: gripping drive motor
- 220: vessel gripping frame
- 230: rotational center axis
- 301: rotation drive unit
- 302: vertical drive unit
- 303: vessel gripping unit

## Claims

1. An automatic analyzer comprising:
a main body;
an arm that horizontally extends out from the main body and has a gripping unit located at a leading end thereof to grip an object to be gripped; and
a sensing section sensing, when the arm, together with the main body, moves downward, whether the arm has caused a rotational movement vertically upward.

2. The automatic analyzer according to claim 1, wherein
the arm includes
a first arm that has a first part with a leading end thereof extending vertically downward, and
a second arm that is located vertically above the first arm to extend along the first arm, and has a second part with a leading end thereof extending vertically downward,
the gripping unit is configured to hold the object to be griped between the first part and the second part in order to grip the object to be gripped, and
if the arm causes an abnormal downward movement, the first arm and the second arm are configured to cause a rotational movement in conjunction with each other.

3. The automatic analyzer according to claim 1, further comprising a cover for covering the main body,
wherein if the arm causes an abnormal downward movement, the cover and the arm are configured to cause a rotational movement in conjunction with each other.

4. The automatic analyzer according to claim 1, further comprising a display section for displaying an alarm if the sensing section senses the rotational movement of the arm.

5. The automatic analyzer according to claim 1, wherein the main body and the arm are configured to cause a rotational movement about a rotational axis in the horizontal direction.

6. A gripping apparatus, comprising:
a main body;
an arm that horizontally extends out from the main body and has a gripping unit located at a leading end thereof to grip an object to be gripped; and
a sensing section that senses, when the arm, together with the main body, moves downward, whether the arm has caused a rotational movement vertically upward.
